# EUROPEAN PATENT SPECIFICATION

(11) **EP 2 080 325 B1**
(45) Date of publication and mention of the grant of the patent: **26.06.2019**
(21) Application number: 07735834.9
(22) Date of filing: 09.05.2007
(51) Int. Cl.: H04M 1/725, H04M 1/60, H04W 84/18

(54) **PAIRING SYSTEM AND METHOD FOR MOBILE DEVICES**
PAARUNGSSYSTEM UND VERFAHREN FÜR MOBILE GERÄTE
SYSTÈME ET PROCÉDÉ D'APPARIEMENT POUR DISPOSITIFS MOBILES

(30) Priority: 09.11.2006 US 558267
(43) Date of publication of application: 22.07.2009
(73) Proprietor: Sony Ericsson Mobile Communications AB, 221 88 Lund (SE)
(72) Inventor: DE LEON, David, 223 59 Lund (SE); RAMSTEN, Fredrik, 214 24 Malmo (SE)
(74) Representative: Aera A/S
(86) International application number: PCT/IB2007/051755
(87) International publication number: WO 2008/056275

(56) References cited:
- EP-A- 1 398 987
- EP-A- 1 566 938
- EP-A1- 1 578 093
- WO-A-2004/089201

## Description

### BACKGROUND

### Technical Field of the Invention

Implementations described herein relate generally to mobile devices and, more particularly, to establishing short-range wireless connections between mobile devices.

### Description of Related Art

Portable communication devices, such as cellular telephones can perform a number of applications, such as making telephone calls, sending and receiving messages, browsing the Internet, receiving different types of feeds like RSS feeds, etc. They are also often provided with short-range wireless communication abilities, such as Bluetooth™ capabilities.

With the rise of such short-range wireless communication abilities there has evolved a number of different associated local devices that communicate locally with a phone, such as headsets, portable hands-free units, music or media players, headphones, and even watches. Additionally, multiple mobile telephones or other personal computing devices may be connected to each other using short-range communication capabilities.

In order to establish communication between devices, users are typically required to "pair" the devices together. Such a pairing provides security in that only known devices may be connected together. Unfortunately, device pairing is often a cumbersome and confusing procedure that results in significant user dissatisfaction. Conventional pairing methods typically require users to identify a device from a list of available devices. Depending on the user's environment, this listing may be lengthy and the device names used in the listing may be difficult to interpret. Once the user determines which device name from the list to select (sometimes through trial and error), the user must then enter a passcode or other sequence to finalize pairing.

EP1398987 discloses a mobile radio transceiver equipped with an optical wireless transmitter or receiver. A first mobile radio transceiver comprising an encoder which generates a signal for the optical beacon transmitter, and a second mobile radio transceiver comprises an optical beacon receiver, which receives the optical signal pattern generated by said optical beacon transmitter, and a decoder which decodes the received optical signal pattern in order to enable the user of the second mobile radio transceiver to easily select other mobile radio transceivers equipped with optical wireless transmitters and to clearly and visibly recognize which mobile radio transceiver has been selected. Instead of a visible light emitting LED, a buzzer or a speaker may optionally be used to enable said user to recognize the selected mobile radio transceiver by hearing a specific sound.

EP1578093 discloses a method of pairing a device with an accessory, e.g. a mobile phone with a headset. The disclosure also relates to a device for performing the method. The method comprises the steps of: letting the device read a graphic representation of information associated with the accessory; converting the graphic representation to information; extracting data from the information representing data required for the pairing; setting the device to an adding accessory mode; setting the accessory to a pairing mode; and performing the pairing using the extracted data. Data required for the pairing is transferred to the device by optical recognition of a graphic representation associated with the accessory. Then the pairing is performed automatically.

### SUMMARY

The embodiments herein are described in the appended claims.

According to one aspect a method may include triggering a visual pattern on a remote device; identifying the visual pattern; and establishing a connection with the remote device based on identification of the visual pattern.

Additionally, the triggering may include transmitting instructions to initiate a visual pattern using a wireless communication protocol.

Additionally, the visual pattern may include a pattern of light emissions from an output device associated with the remote device.

Additionally, the output device may include a display.

Additionally, the output device may include a visual indicator.

Additionally, the output device may include a light emitting diode (LED).

Additionally, the visual pattern may include an assigned sequence of flashes.

Additionally, the method may include assigning the visual pattern to the remote device; storing the assignment; and identifying the remote device based on the stored assignment.

Additionally, the identifying the visual pattern may include detecting light output by the visual pattern; and comparing the detected light output to the visual pattern.

Additionally, the establishing a connection may include establishing a short-range wireless communication connection.

Additionally, the short-range wireless communication connection may include a Bluetooth connection.

Additionally, the method may include triggering a plurality of unique visual patterns on a plurality of remote devices; identifying a visual pattern associated with a selected remote device; and establishing a connection with the selected remote device upon identification of the associated visual pattern.

In a second aspect, a mobile device may include a short-range wireless transceiver configured to communicate with a remote device; a processor configured to trigger a visual pattern on an output device associated with the remote device via the short-range wireless transceiver; and a light sensor configured to monitor the visual pattern associated with the remote device, wherein the processor is further configured to identify the remote device based on the visual pattern monitored by the light sensor and to initiate pairing with the remote device, via the short-range wireless transceiver, based on the identification.

Additionally, the short-range wireless transceiver may include a Bluetooth transceiver.

Additionally, the triggered visual pattern may include a unique optically visible pattern of light output.

Additionally, the processor may be further configured to trigger unique light output patterns in a plurality of remote devices, and to identify a selected remote device based on a monitored light output from the selected remote device.

In a third aspect, a device may include means for outputting instructions to a remote device, the instructions causing the remote device to output a visual pattern; means for detecting the visual pattern; and means for establishing short-range wireless communication with the remote device upon detection of the visual pattern.

Additionally, the means for detecting the visual pattern may include a light sensor.

Additionally, the device may include means for assigning the visual pattern to the remote device; and means for storing the assignment, wherein the means for detecting the visual pattern may include means for identifying the remote device by comparing the detected visual pattern with the stored assignment.

In a fourth aspect, a device may include means for outputting instructions to a plurality of remote devices, the instructions causing each of the plurality of remote device to output a unique visual pattern; means for identifying a selected remote device based on its unique visual pattern; and means for pairing with the selected remote device based on the identification.

### BRIEF DESCRIPTION OF THE DRAWINGS

The accompanying drawings, which are incorporated in and constitute a part of this specification, illustrate an embodiment of the invention and, together with the description, explain the invention. In the drawings,
Fig. 1 is a diagram of an exemplary system in which systems and methods described below may be implemented;
Fig. 2 is a diagram of a first exemplary mobile device of Fig. 1;
Fig. 3 is a diagram of a second exemplary mobile device of Fig. 2; and
Fig. 4 is a flowchart of an exemplary process for pairing mobile devices.

### DETAILED DESCRIPTION OF EMBODIMENTS

The following detailed description of the invention refers to the accompanying drawings. The same reference numbers in different drawings may identify the same or similar elements. Also, the following detailed description does not limit the invention.

A system and a method are described for pairing devices using a short-range wireless communication protocol. A first device (e.g., a mobile telephone) may cause a second device (e.g., a headset) to output a unique visual pattern. The first device may monitor the pattern output by the second device, identify the second device based on the monitored pattern, and pair the devices upon identification.

### EXEMPLARY SYSTEM

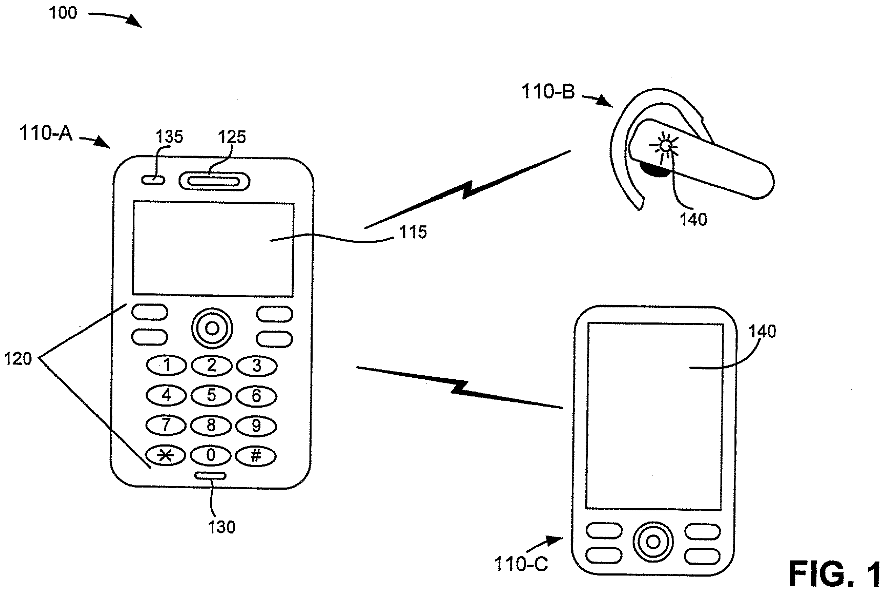

Fig. 1 is a diagram of an exemplary system 100 in which systems and methods described herein may be implemented. As illustrated in Fig. 1, system 100 may include mobile devices 110-A, 110-B, and 110-C, referred to collectively as "mobile devices 110." Device 110-A may include a display 115, a keypad 120, a speaker 125, a microphone 130, and a light sensor 135. Devices 110-B and 110-C may include a visual output device 140 (e.g., an LED in device 110-B and a display in device 110-C). Each of devices 110 may include additional components and features commensurate with their respective functions. Further, the number of mobile devices 110 illustrated in Fig. 1 is provided for simplicity. In practice, a typical system may include more mobile devices 110 than illustrated in Fig. 1.

Mobile devices 110 may include various devices designed to communicate with each other to enable data transmission therebetween. Examples of suitable devices may include cellular radiotelephones; Personal Communications System (PCS) devices that may combine a cellular radiotelephone with data processing, facsimile and data communications capabilities; accessory devices such as telephone headsets; Personal Digital Assistants (PDAs) that can include a radiotelephone, pager, Internet/intranet access, Web browser, organizer, calendar and/or a global positioning system (GPS) receiver; laptop and/or palmtop receivers or an appliance that includes a radiotelephone transceiver; and/or other similar types of devices.

In one implementation described below, mobile devices 110 may communicate wirelessly using a number of short distance wireless communication protocols. For example, mobile devices 110 may communicate using a Bluetooth protocol. Bluetooth is a short-range wireless connectivity standard that uses specific radio frequencies to enable communication between devices within a predetermined proximity to each other. Communication between mobile devices 110 may be established and initiated through a pairing process by which mobile devices 110 are identified to each other. As described above, conventional pairing processes are often problematic in that recognizing a particular device among a number of possible devices may be difficult. Furthermore, multiple steps may be required to pair known devices together. Mobile devices 110 may also communicate using one or more other short distance wireless communication protocols, such as UltraWideBand, or IEEE 802.11x.

### EXEMPLARY MOBILE DEVICE CONFIGURATION

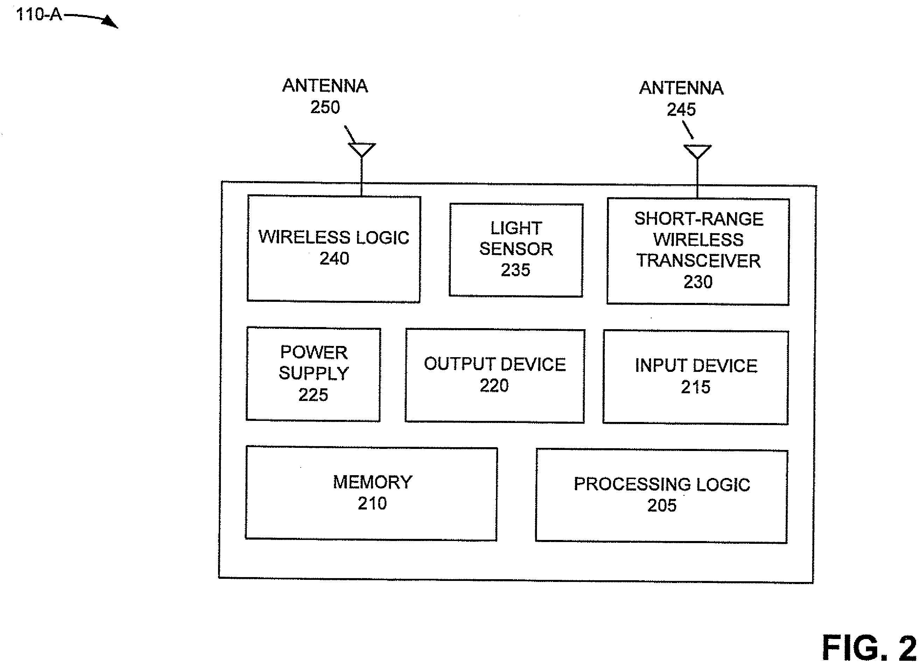

Fig. 2 is an exemplary diagram of mobile device 110-A. It will be appreciated that, in some implementations, mobile device 110-B may be similarly configured. In other implementations, mobile device 110-B maybe configured to include more or fewer elements. One embodiment of mobile device 110-B will be described in additional detail below. As illustrated in Fig. 2, mobile device 110-A may include processing logic 205, a memory 210, an input device 215, an output device 220, a power supply 225, a short-range wireless transceiver 230, a light sensor 235, wireless logic 240, and antennas 245 and 250. It will be appreciated that mobile device 110-A may include other components (not shown) that aid in receiving, transmitting, and/or processing data. Moreover, it will be appreciated that other configurations are possible.

Processing logic 205 may include any type of processor or microprocessor that may interpret and execute instructions. In other implementations, processing logic 205 may be implemented as or include an application specific integrated circuit (ASIC), a field programmable gate array (FPGA), or the like. Memory 210 may include a random access memory (RAM) or another type of dynamic storage device that may store information and instructions for execution by processing logic 205, a read only memory (ROM) or another type of static storage device that may store static information and instructions for the processing logic 205, and/or some other type of magnetic or optical recording medium and its corresponding drive for storing information and/or instructions.

Input device 215 may include a device that permits a user to input information to mobile device 110-A, such as a keypad, a keyboard, a mouse, a pen, a microphone, one or more biometric mechanisms, and the like. Output device 220 may include a device that outputs information to the user, such as a display, a printer, a speaker, etc. Power supply 225 may include a battery, or the like, for providing power to the components of mobile device 110-A.

Short-range, wireless transceiver 230 may include a transmitter and receiver device capable of enabling exchange of data and control signals using the Bluetooth protocol (or any other suitable, short-range wireless communications protocol) with one or more Bluetooth-enabled devices. As described briefly above, the Bluetooth protocol is a short range radio frequency standard for enabling the creation of personal area networks or PANs. Pairs of Bluetooth-enabled devices may connect to each other to form a network and exchange information. Exemplary Bluetooth-enabled devices include mobile phones, headsets, media players, PDAs, and mobile computers.

Light sensor 235 may include a detector or sensor for detecting ambient light or light directed toward light sensor 235. In one implementation, light sensor 235 may be sensitive to variations in detected light using any suitable technology, such as photodiodes or other photoelectric components. In response to light detection, a signal indicative thereof may be transmitted to processing logic 205. In one implementation, light sensor 235 may be used to monitor a level of ambient light in an environment. Processing logic 205 may then use the monitored ambient light level to determine an appropriate lighting scheme for device 110-A (e.g., keypad backlighting, display brightness, etc.). In an additional implementation, light sensor 235, in combination with processing logic 205, may be used to detect and process a pattern of light visible to light sensor. Identified patterns may then be used to trigger appropriate actions in device 110-A.

Wireless logic 240 may include a transceiver device capable of transmitting and receiving data and control signals using a wireless communications protocol such as a cellular radiotelephone protocol (e.g., GSM (global system for mobile communications), PCS (personal communication services), FDMA (frequency division multiple access), CDMA (code division multiple access), TDMA (time division multiple access), etc.). In additional implementations, wireless logic 240 may use short distance wireless communication protocols such as the Bluetooth protocol, one or more of the IEEE 802.11 protocols, the WiMax protocol, the Ultra Wideband protocol, or any other suitable wireless communication protocol.

Antennas 245 and 250 may include, for example, one or more directional antennas and/or omni directional antennas.

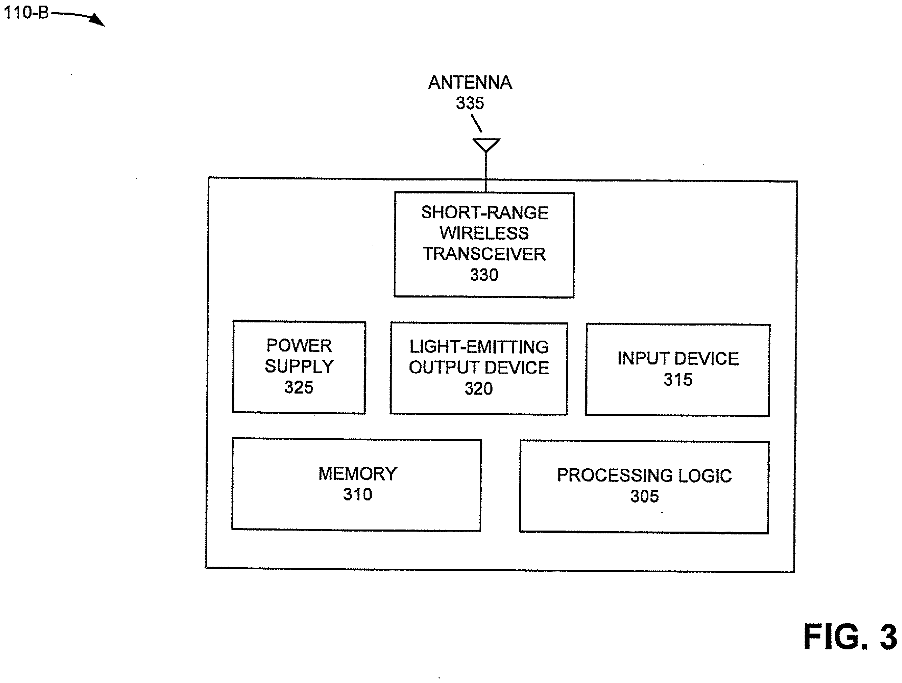

Fig. 3 is an exemplary diagram of mobile device 110-B. As illustrated, mobile device 110-B may include processing logic 305, a memory 310, an input device 315, a light-emitting output device 320, a power supply 325, a short-range wireless transceiver 330, and an antenna 335. It will be appreciated that mobile device 110-B may include other components (not shown) that aid in receiving, transmitting, and/or processing data. Moreover, it will be appreciated that other configurations are possible.

As with processing logic 205 described above, processing logic 305 may also include any type of processor or microprocessor that may interpret and execute instructions. Memory 310 may include a random access memory (RAM) or another type of dynamic storage device that may store information and instructions for execution by processing logic 305, a read only memory (ROM) or another type of static storage device that may store static information and instructions for the processing logic 305, and/or some other type of magnetic or optical recording medium and its corresponding drive for storing information and/or instructions.

Input device 315 may include a device that permits a user to input information or commands to mobile device 110-B, such as a keypad having one or more buttons, a keyboard, a mouse, a pen, a microphone, one or more biometric mechanisms, and the like. Light-emitting output device 320 may include a device that outputs visual information to the user, such as a display, a LED (light emitting diode), etc. Power supply 325 may include a battery, or the like, for providing power to the components of mobile device 110-B.

Short-range wireless transceiver 330 may include a transmitter and receiver device capable of enabling exchange of data and control signals using the Bluetooth protocol (or other suitable short range communications protocol) with one or more Bluetooth-enabled devices, such as mobile device 110-A. Antenna 335 may include, for example, one or more directional antennas and/or omni directional antennas.

As will be described in detail below, mobile device 110-A may use short-range wireless transceiver 230 and light sensor 235 to facilitate identification and pairing with another device, such as mobile device 110-B. More specifically, Bluetooth transceiver 230, acting upon instructions received from processing logic 205, may cause light-emitting output device 320 of device 110-B to act in a predetermined manner. Examples may include causing light-emitting output device 320 to flash in a predetermined pattern or at a predetermined frequency. Alternatively, Bluetooth transceiver 230 may cause light-emitting output device 320 to output at a predetermined intensity or for a predetermined period of time. Light sensor 235 may then monitor the output of light-emitting output device 320. Processor 205 may then identify device 110-B based on the monitored pattern. Upon identification, device 110-B may be paired or otherwise connected to device 110-A. Mobile devices 110-A and 110-B may perform these operations and other operations in response to processing logic 205 and 305, respectively, executing software instructions contained in a computer-readable medium, such as memory 210 or 310, respectively. A computer-readable medium may be defined as a physical or logical memory device.

The software instructions may be read into memory 210 from another computer-readable medium or from another device via, for example, short-rage wireless transceiver 230 or wireless logic 245. The software instructions contained in memory 210 may cause processing logic 205 to perform processes that will be described later. Alternatively, hardwired circuitry may be used in place of or in combination with software instructions to implement processes consistent with the principles of the invention. Thus, implementations consistent with the principles of the invention are not limited to any specific combination of hardware circuitry and software.

### EXEMPLARY PROCESSING

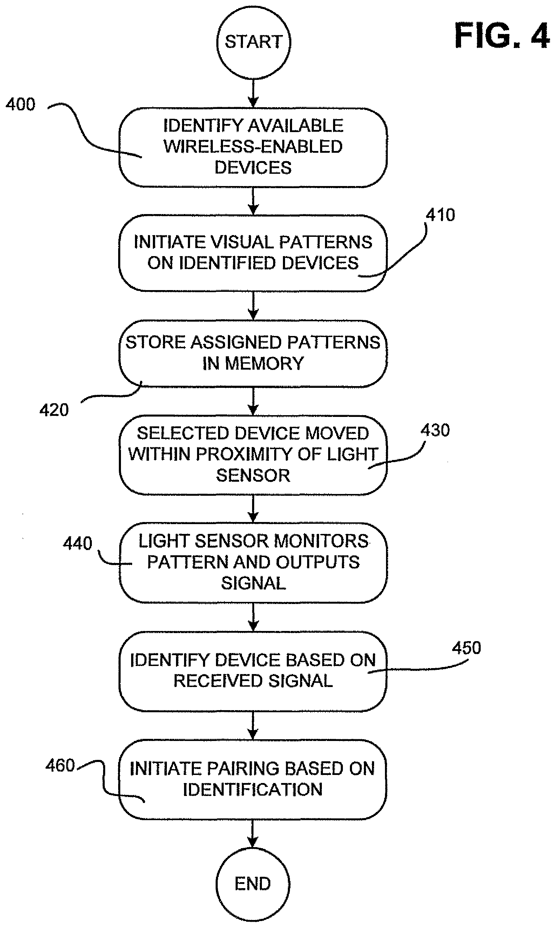

Fig. 4 is a flowchart of an exemplary process for facilitating device identification and pairing via a short distance wireless connection. It will be assumed for this process that mobile device 110-A wants to establish a short distance wireless connection with mobile device 110-B.

Processing may begin with mobile device 1 10-A identifying all available short-range-enabled (e.g., Bluetooth-enabled) devices (act 400). As is known in the art, short-range wireless communications protocols typically provide for polling of available devices or network connections for enabling users to select a desired device or network with which to connect. This action may be performed automatically at predetermined intervals, or upon request of a user. Once identified, mobile device 110-A may then initiate visual indicator patterns in each identified device (act 410). As described above, available devices may include light-emitting output devices (e.g., display screens, or LEDs) that are responsive to instructions from device 110-A relating to the manner and intensity of light discharged therefrom. To facilitate possible identification of available devices, each available device may be caused to output in a different manner from each other available device. For example, a first available device may be caused to flash every 3 ms, while a second available device may be caused to flash every 5 ms. Alternatively, devices may be caused to output in predetermined patterns (e.g., 3 short flashes, followed by a long flash, etc.). The visual indicator patterns assigned to each recognized device may be stored in a memory (e.g., memory 210 for use in pairing a desired device (act 420). By causing recognized and available devices to output light in a defined manner, a user searching for a device to connect with may more readily determine available devices.

Upon user selection of a desired device for pairing (e.g., device 110-B), the device may be moved into proximity with light sensor 235 (act 430). Light sensor 235 may monitor the pattern of device 110-B and output a pattern signal indicative thereof to processing logic 205 (act 440). Processing logic 205 may then identify device 110-B based on the pattern signal (act 450). That is, processing logic 205 may compare a received visual pattern with the assigned patterns stored in act 420, and may identify a device based on the received pattern. Processing logic 205 may then initiate pairing between device 110-B and device 110-A (460). In one implementation, the pairing may be performed automatically following device pattern recognition, however such pairing may include a user confirmation of the selected device or other suitable intervening steps.

By using optical patterns and light sensing capabilities, pairing of short-range wireless-enabled devices may be substantially simplified over known systems. Users are not required to identify and select a desired device from a potentially large list of cryptically named devices. Furthermore, the optical patterns used to facilitate recognition of devices may act as a passcode used in establishing security in conventional systems, thereby requiring no additional user action to pair the devices. Additionally, by requiring physical proximity between devices, additional security maybe realized. Because devices paired in the above-described manner are in close physical proximity and also exhibit optically visible characteristics upon pairing (e.g., flashing, etc.), it is unlikely that an unauthorized connection may be made.

### CONCLUSION

Implementations described herein may provide a system and method for significantly simplifying short-range wireless pairing between mobile devices. In one implementation, visual indicators and a light sensor may be used to identify and pair devices to one another.

The foregoing description of preferred embodiments of the invention provides illustration and description, but is not intended to be exhaustive or to limit the invention to the precise form disclosed. Modifications and variations are possible in light of the above teachings or may be acquired from practice of the invention.

For example, while the description above focused on using the Bluetooth protocol to establish wireless communication between devices, it will be appreciated that other wireless communication protocols (e.g., WiMax, ultrawideband, 802.11 technologies, etc.) could alternatively be used to establish communication between the devices.

While series of acts have been described with regard to Fig. 4, the order of the acts may be modified in other implementations consistent with the principles of the invention. Further, non-dependent acts may be performed in parallel.

It will be apparent to one of ordinary skill in the art that aspects of the invention, as described above, may be implemented in many different forms of software, firmware, and hardware in the implementations illustrated in the figures. The actual software code or specialized control hardware used to implement aspects consistent with the principles of the invention is not limiting of the invention. Thus, the operation and behavior of the aspects were described without reference to the specific software code. It is understood that one would be able to design software and control hardware to implement the aspects based on the description herein.

Further, certain portions of the invention may be implemented as "logic" that performs one or more functions. This logic may include hardware, such as an application specific integrated circuit or a field programmable gate array, software, or a combination of hardware and software.

It should be emphasized that the term "comprises/comprising" when used in this specification is taken to specify the presence of stated features, integers, steps, or components, but does not preclude the presence or addition of one or more other features, integers, steps, components, or groups thereof.

No element, act, or instruction used in the present application should be construed as critical or essential to the invention unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise.

## Claims

1. A method of pairing a mobile device (110-A) with a remote device (110-B, 110-C), the method comprising pairing the mobile device with the remote device wherein pairing the mobile device with the remote device comprises:
outputting, by an output device of the remote device, a visual pattern, wherein the visual pattern includes a unique optically visible pattern of light output associated with the remote device;
detecting, at the mobile device, the visual pattern outputted by the remote device;
identifying, via a processor of the mobile device, the remote device based on the detected visual pattern by comparing the detected visual pattern with assigned patterns; and
establishing a short-range wireless communication connection between the remote device and the mobile device based on identification of the remote device that outputted the visual pattern.

2. The method of claim 1, wherein the method comprises:
transmitting, via a wireless communication protocol, instructions from the mobile device to the remote device, wherein the instructions initiate the output of the visual pattern on the remote device.

3. The method of claim 2, wherein the visual pattern includes a pattern of light emissions from an output device associated with the remote device.

4. The method of claim 3, wherein the output device comprises a visual indicator.

5. The method of claim 3, wherein the output device comprises a light emitting diode.

6. The method of claim 1, further comprising:
assigning, at the mobile device, the visual pattern to the remote device;
storing the assignment in memory on the mobile device; and
identifying, at the mobile device, the remote device based on comparing the received visual pattern to the stored assignment.

7. The method of claim 1, wherein the short-range wireless communication connection is a Bluetooth connection.

8. A system (100) including a mobile device (110-A) configured to pair with a remote device (110-B, 110-C), the mobile device comprising:
a short-range wireless transceiver configured to communicate with the remote device;
a processor configured to *i)* detect a visual pattern outputted by the remote device, wherein the visual pattern includes a unique optically visible pattern of light output associated with the remote device, *ii)* identify the remote device based on the detected visual pattern by comparing the detected visual pattern with assigned patterns, and *iii)* establish a short-range wireless communication connection with the remote device via the short-range wireless transceiver based on the identification of the remote device that outputted the visual pattern,
wherein the system (100) further includes the remote device, comprising an output device configured to output the visual pattern.

9. The system of claim 8, wherein the short-range wireless transceiver is a Bluetooth transceiver.

## Patentansprüche

1. Verfahren zum Paaren eines mobilen Geräts (110-A) mit einem entfernten Gerät (110-B, 110-C), wobei das Verfahren das Paaren des mobilen Geräts mit dem entfernten Gerät umfasst, wobei das Paaren des mobilen Geräts mit dem entfernten Gerät Folgendes umfasst:
Ausgeben, durch ein Ausgabegerät des entfernten Geräts, eines visuellen Musters, wobei das visuelle Muster eine einzigartige optisch sichtbare Lichtmusterausgabe beinhaltet, die mit dem entfernten Gerät assoziiert ist;
Erkennen, bei dem mobilen Gerät, des visuellen Musters, das durch das entfernte Gerät ausgegeben wird;
Identifizieren, durch einen Prozessor des mobilen Geräts, des entfernten Geräts auf Grundlage des erkannten visuellen Musters durch Vergleichen des erkannten visuellen Musters mit zugeordneten Mustern; und Aufbauen einer drahtlosen Kurzstreckenkommunikationsverbindung zwischen dem entfernten Gerät und dem mobilen Gerät auf Grundlage der Identifikation des entfernten Geräts, das das visuelle Muster ausgegeben hat.

2. Verfahren nach Anspruch 1, wobei das Verfahren Folgendes umfasst:
Übertragen, über ein drahtloses Kommunikationsprotokoll, von Anweisungen von dem mobilen Gerät an das entfernte Gerät, wobei die Anweisungen die Ausgabe des visuellen Musters an dem entfernten Gerät initiieren.

3. Verfahren nach Anspruch 2, wobei das visuelle Muster ein Muster von Lichtemissionen von einem Ausgabegerät beinhaltet, das mit dem entfernten Gerät assoziiert ist.

4. Verfahren nach Anspruch 3, wobei das Ausgabegerät einen visuellen Indikator umfasst.

5. Verfahren nach Anspruch 3, wobei das Ausgabegerät eine lichtemittierende Diode umfasst.

6. Verfahren nach Anspruch 1, ferner Folgendes umfassend:
Zuordnen, bei dem mobilen Gerät, des visuellen Musters zu dem entfernten Gerät;
Speichern der Zuordnung in einem Speicher des mobilen Geräts; und
Identifizieren, bei dem mobilen Gerät, des entfernten Geräts auf Grundlage von Vergleichen des empfangenen visuellen Musters mit der gespeicherten Zuordnung.

7. Verfahren nach Anspruch 1, wobei die drahtlose Kurzstreckenkommunikationsverbindung eine Bluetooth-Verbindung ist.

8. System (100), das ein mobiles Gerät (110-A) beinhaltet, das dazu konfiguriert ist, mit einem entfernten Gerät (110-B, 110-C) zu paaren, wobei das mobile Gerät Folgendes umfasst:
einen drahtlosen Kurzstreckentransceiver, der dazu konfiguriert ist, mit dem entfernten Gerät zu kommunizieren;
einen Prozessor, der dazu konfiguriert ist, um *i)* ein visuelles Muster zu erkennen, das durch das entfernte Gerät ausgegeben wird, wobei das visuelle Muster ein einzigartiges optisch sichtbares Lichtmuster beinhaltet, das mit dem entfernten Gerät assoziiert ist, um *ii)* das entfernte Gerät auf Grundlage des erkannten visuellen Musters durch Vergleichen des erkannten visuellen Musters mit zugeordneten Mustern zu identifizieren und um *iii)* eine drahtlose Kurzstreckenkommunikationsverbindung mit dem entfernten Gerät über den drahtlosen Kurzstreckentransceiver auf Grundlage der Identifikation des entfernten Geräts, das das visuelle Muster ausgegeben hat, aufzubauen,
wobei das System (100) ferner das entfernte Gerät beinhaltet, das ein Ausgabegerät umfasst, das dazu konfiguriert ist, das visuelle Muster auszugeben.

9. System nach Anspruch 8, wobei der drahtlose Kurzstreckentransceiver ein Bluetooth-Transceiver ist.

## Revendications

1. Procédé d'appariement d'un dispositif mobile (110-A) avec un dispositif distant (110-B, 110-C), le procédé comprenant l'appariement du dispositif mobile avec le dispositif distant, dans lequel l'appariement du dispositif mobile avec le dispositif distant comprend :
la fourniture en sortie, par un dispositif de sortie du dispositif distant, d'un motif visuel, dans lequel le motif visuel inclut un motif unique visible optiquement d'une sortie de lumière associée au dispositif distant ;
la détection, au niveau du dispositif mobile, du motif visuel délivré en sortie par le dispositif distant ;
l'identification, via un processeur du dispositif mobile, du dispositif distant sur la base du motif visuel détecté en comparant le motif visuel détecté aux motifs attribués ; et
l'établissement d'une connexion de communication sans fil à courte portée entre le dispositif distant et le dispositif mobile sur la base d'une identification du dispositif distant qui a délivré en sortie le motif visuel.

2. Procédé selon la revendication 1, dans lequel le procédé comprend :
la transmission, par le biais d'un protocole de communication sans fil, d'instructions du dispositif mobile au dispositif distant, dans lequel les instructions lancent la sortie du motif visuel sur le dispositif distant.

3. Procédé selon la revendication 2, dans lequel le motif visuel inclut un motif d'émissions de lumière à partir d'un dispositif de sortie associé au dispositif distant.

4. Procédé selon la revendication 3, dans lequel le dispositif de sortie comprend un indicateur visuel.

5. Procédé selon la revendication 3, dans lequel le dispositif de sortie comprend une diode électroluminescente.

6. Procédé selon la revendication 1, comprenant en outre :
l'attribution, au niveau du dispositif mobile, du motif visuel au dispositif distant ;
le stockage de l'attribution en mémoire sur le dispositif mobile ; et
l'identification, au niveau du dispositif mobile, du dispositif distant sur la base d'une comparaison du motif visuel à l'attribution stockée.

7. Procédé selon la revendication 1, dans lequel la connexion de communication sans fil à courte portée est une connexion Bluetooth.

8. Système (100) comprenant un dispositif mobile (110-A) configuré pour s'apparier avec un dispositif distant (110-B, 110-C), le dispositif mobile comprenant :
un émetteur-récepteur sans fil à courte portée configuré pour communiquer avec le dispositif distant ;
un processeur configuré pour i) détecter un motif visuel délivré en sortie par le dispositif distant, dans lequel le motif visuel inclut un motif unique visible optiquement d'une sortie de lumière associée au dispositif distant, ii) identifier le dispositif distant sur la base du motif visuel détecté en comparant le motif visuel détecté aux motifs attribués, et iii) établir une connexion de communication sans fil à courte portée avec le dispositif distant via l'émetteur-récepteur sans fil à courte portée sur la base de l'identification du dispositif distant qui a délivré en sortie le motif visuel,
dans lequel le système (100) comprend en outre le dispositif distant, comprenant un dispositif de sortie configuré pour délivrer en sortie le motif visuel.

9. Système selon la revendication 8, dans lequel l'émetteur-récepteur sans fil à courte portée est un émetteur-récepteur Bluetooth.
